# EUROPEAN PATENT APPLICATION

(11) **EP 2 570 912 A1**
(43) Date of publication of application: **20.03.2013**
(21) Application number: 11852882.7
(22) Date of filing: 13.09.2011
(51) Int. Cl.: G06F 3/06

(54) **STORAGE METHOD AND DEVICE BASED ON DATA CONTENT IDENTIFICATION**

(30) Priority: 31.12.2010 CN 201010624534
(71) Applicant: Huawei Technologies Co. Ltd., Longgang District Shenzhen Guangdong 518129 (CN)
(72) Inventor: LUO, Jiaolin, Chengdu Sichuan 611731 (CN)
(74) Representative: Kreuz, Georg Maria
(86) International application number: PCT/CN2011/079565
(87) International publication number: WO 2012/088925

(57) **Abstract**

The embodiments of the present invention provide a storage method and a storage apparatus which are based on data content identification. Through the storage method and the storage apparatus which are based on data content identification and provided in the embodiments of the present invention, the data from the host is received, the content of the data is scanned to obtain format characteristics of the data, and the characteristics are matched with format characteristics in a content characteristic base to determine attributes of the data, and the data is sorted and stored according to the data attributes, so that a storage device can obtain attributes of the data to be stored and optimize the data, which improves data storage performance of the storage device.

## Description

This application claims priority to Chinese Patent Application No. 201010624534.3, filed with the Chinese Patent Office on December 31, 2010 and entitled "STORAGE METHOD AND APPARATUS WHICH ARE BASED ON DATA CONTENT IDENTIFICATION", which is incorporated herein by reference in its entirety.

### FIELD OF THE INVENTION

The present invention relates to the data storage field, and in particular, to a storage method and a storage apparatus which are based on data content identification.

### BACKGROUND OF THE INVENTION

Basic data storage operations in the current storage system are: A storage controller receives a write request from a host, and performs a write operation on a hard disk or a disk array according to the write request to store data into the hard disk or the disk array.

In the prior art, a storage medium cannot perceive an upper-layer application and cannot obtain specific attributes of the data. For example, the storage medium is unaware whether the data that needs to be stored currently is a frame of a video, or a frame of an MP3, or a text, or a database record, which causes that storage performance of the current storage system is improved insignificantly and better performance optimization is not achieved.

### SUMMARY OF THE INVENTION

Embodiments of the present invention provide a storage method and a storage apparatus which are based on data content identification, so that a storage device can obtain attributes of data to be stored and optimize the data, and the data storage performance of the storage device is improved.

The objectives of the embodiments of the present invention are fulfilled through the following technical solutions:
A storage method based on data content identification includes:
   receiving data from a host;
   scanning content of the data to obtain format characteristics of the data;
   matching the format characteristics with format characteristics in a content characteristic base to determine attributes of the data; and
   sorting and storing the data according to the attributes of the data.
A storage apparatus based on data content identification includes:
   a receiving module, configured to receive data from a host;
   a content scanning module, configured to scan content of the data to obtain format characteristics of the data;
   a characteristic base, configured to store format characteristics of various contents;
   a characteristics matching module, configured to match the format characteristics obtained by the content scanning module with format characteristics in a content characteristic base to determine attributes of the data; and
   a storage module, configured to sort and store the data according to the data attributes determined by the characteristics matching module.
Through the storage method and the storage apparatus which are based on data content identification and are provided in the embodiments of the present invention, the data from the host is received, the content of the data is scanned to obtain the format characteristics of the data, and the format characteristics are matched with the format characteristics in the characteristic base to determine the attributes of the data, and the data is sorted and stored according to the data attributes, so that the storage device can obtain the attributes of the data to be stored and optimize the data, which improves data storage performance of the storage device.

### BRIEF DESCRIPTION OF THE DRAWINGS

To illustrate the technical solutions in the embodiments of the present invention or in the prior art more clearly, the accompanying drawings required for describing the embodiments are briefly introduced in the following. Apparently, the accompanying drawings in the following description are merely some embodiments of the present invention, and persons of ordinary skill in the art can further derive other drawings according to these accompanying drawings without making creative efforts.
FIG. 1 is an application scenario diagram of a storage method based on data content identification according to an embodiment of the present invention;
FIG. 2 is a flow chart of a storage method based on data content identification according to an embodiment of the present invention;
FIG. 3 is a flow chart of another storage method based on data content identification according to an embodiment of the present invention; and
FIG. 4 is a schematic diagram of a storage apparatus based on data content identification according to an embodiment of the present invention.

### DETAILED DESCRIPTION OF THE EMBODIMENTS

To make the foregoing objectives, characteristics, and advantages of the present invention clearer and more comprehensible, the present invention is further described in detail in the following with reference to the accompanying drawings and specific implementation manners.

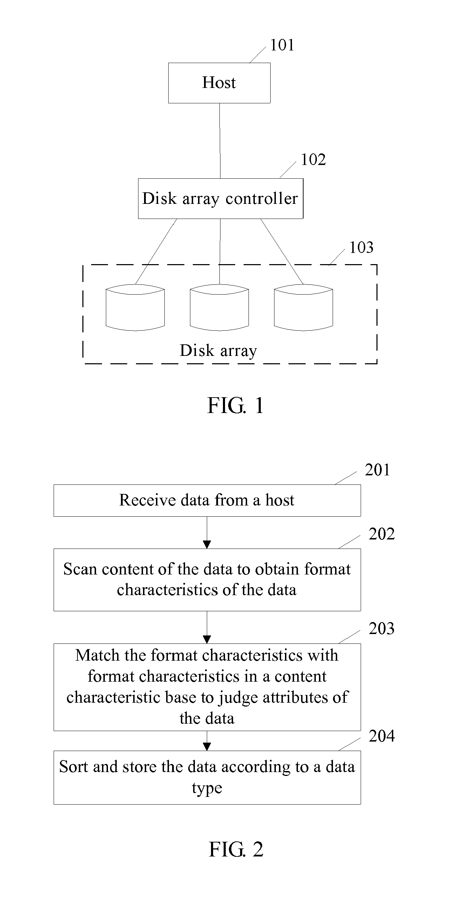

FIG. 1 shows an application scenario of an embodiment of the present invention. A host 101, a disk array controller 102, and a disk array 103, and the disk array controller 102 receives a data storage request from the host 101.

A storage method based on data content identification is provided in an embodiment of the present invention. Taking the disk array controller 102 as an example, as shown in FIG. 2, the method includes:
Step 201: Receive data from the host.
Step 202: Scan the content of the data to obtain format characteristics of the data.
Step 203: Match the format characteristics with format characteristics in a characteristic base to determine attributes of the data.
Step 204: Sort and store the data according to the attributes of the data.

In this embodiment of the present invention, the data from the host is received, the content of the data is scanned to obtain the format characteristics of the data, and the format characteristics are matched with the format characteristics in the characteristic base to determine the attributes of the data, and the data is sorted and stored according to the data attributes, so that a storage device can obtain the attributes of the data to be stored and optimize the data, which improves data storage performance of the storage device.

Step 202 may specifically include:
Scanning the content of the data, and obtaining the characteristics corresponding to different contents, where the corresponding format characteristics include a value of a fixed field. For example, corresponding audio or video data adopts different data encapsulation forms because the audio or video data corresponds to different data formats. A specific value of a specific field can reflect the attributes of the data. In this step, the attributes of the data are identified by obtaining specific values of these specific fields. The data attributes include: data type, data 10 access amount, data access frequency, and so on. The data type may include: video data, audio data, image data, database data, or the like. For a data block, the unit of identifying the attributes of the data is a data block; for a file system, the unit of identifying the attributes of the data is a file.

Step 203 may specifically include:
Performing a Hash operation on the format characteristics which are of the data and are obtained in step 202 to obtain a Hash key value corresponding to the format characteristics of the data;
matching the Hash key value with a Hash key value in a content characteristic base, where the content characteristic base saves correspondence between the Hash key value and the data attributes.

Step 204 may specifically include:
After the data attributes are obtained through step 203, the storage of the data may be optimized in many ways, including:
   optimizing a storage location of the data according to the attributes of the data, and by identifying the data attributes, the disk array can adjust the storage location and the relationship that are of the data according to the data attributes. For example, a same disk array or a same hard disk stores video data uniformly; if the storage space permits, the video data may also be stored in a logically adjacent location, which can facilitate an access operation on the data and enhance the storage performance. For another example: the number of writes into a Flash is generally only about 100,000 times at most; and in a normal condition, when it is 50,000 times, the damage to the Flash tends to be great. Therefore, on every occasion of writing, the data needs to be rewritten into a data block that has a relatively low count of writes, and an original data block needs to be discarded. By identifying the data attributes, an SSD can adjust the "wear balance" algorithm of the SSD. When certain data attributes tends to be modified frequently (for example, redo data of a database, log data of the file system, and so on), the data may be preferentially written into the Flash particles with a longest lifetime or into a Cache temporarily to prolong the time of saving the data in the Cache;
   or,

According to the data attributes, the data with large 10 access data amount is stored in a rapid storage medium, and the data is pre-read; and the data with small 10 access data amount is stored in a slow storage medium. For example, for the data in a database, every write operation in the database may lead to modification of a redo log, while the 10 access to the table space (TableSpace) is rather regular. Therefore, through identifying whether the data is redo data or Tablespace data, the redo data is placed into a storage medium with a faster speed, for example, storing the redo data into the SSD, and the data of the table space is stored into a relatively slow medium, which can optimize access to the database greatly; or

According to the data attributes, the data with frequent 10 access is stored in the Cache, and the data with seldom 10 access is stored in the storage medium. For example, for the data that a user needs to access frequently, this part of data may be stored in the Cache directly and be performed a pre-read operation, and the data that the user seldom accesses may be stored in a magnetic disk.

In this step, the several optimization manners in the foregoing may be used in combination. For example, the data with large 10 access amount and frequent 10 access may be buffered in a large-capacity rapid medium.

In this embodiment of the present invention, the data from the host is received, the content of the data is scanned to obtain the characteristics of the data, and the characteristics are matched with the characteristics in the content characteristic base to determine the attributes of the data, and the data is sorted and stored according to the data attributes, so that the storage device can obtain the attributes of the data to be stored and optimize the data, which improves data storage performance of the storage device.

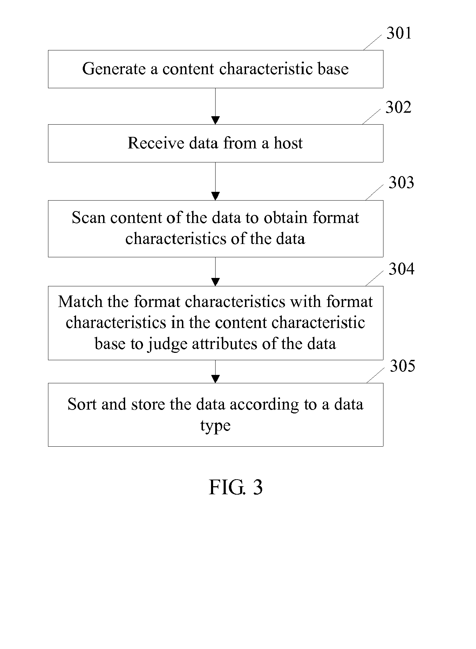

Another storage method based on data content identification is provided in an embodiment of the present invention. As shown in FIG. 3, the method includes:
Step 301: Generate a content characteristic base.
Step 302: Receive data from a host.
Step 303: Scan the content of the data to obtain format characteristics of the data.
Step 304: Match the characteristics with format characteristics in the content characteristic base to determine attributes of the data.
Step 305: Sort and store the data according to the attributes of the data.
Step 301 may specifically include:
   Perform a Hash operation on the format characteristics of the data whose data attributes are determined, so as to obtain a corresponding Hash key value.
Store the Hash key value and the data attributes into the content characteristic base correspondingly.
Step 302, step 303, step 304, and step 305 correspond to step 201, step 202, step 203, and step 204, respectively, which are not repeatedly described here again.

In this embodiment of the present invention, the data from the host is received, the content of the data is scanned to obtain the format characteristics of the data, and the format characteristics are matched with the format characteristics in the content characteristic base to determine the attributes of the data, and the data is sorted and stored according to the data attributes, so that a storage device can obtain the attributes of the data to be stored and optimize the data, which improves data storage performance of the storage device.

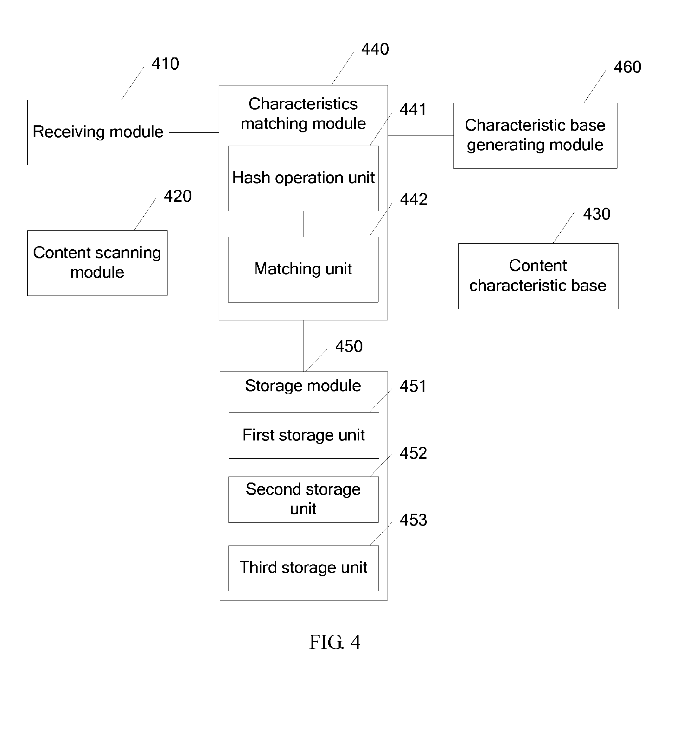

A storage apparatus based on data content identification is further provided in an embodiment of the present invention. As shown in FIG. 4, the apparatus includes:
a receiving module 410, configured to receive data from a host;
a content scanning module 420, configured to scan content of the data to obtain format characteristics of the data;
a content characteristic base 430, configured to store format characteristics of various contents;
a characteristics matching module 440, configured to match the format characteristics obtained by the content scanning module with format characteristics in a content characteristic base to determine attributes of the data; and
a storage module 450, configured to sort and store the data according to the data attributes determined by the characteristics matching module.

The apparatus further includes:
a characteristic base generating module 460, configured to perform a Hash operation on the format characteristics of the data whose data attributes are determined, so as to obtain a corresponding Hash key value; and store the Hash key value and the data attributes into the content characteristic base 430 correspondingly.

The content scanning module 420 is specifically configured to obtain the corresponding format characteristics of different contents, where the corresponding format characteristics include a value of a fixed field.

The characteristics matching module 440 includes:
a Hash operation unit 441, configured to perform a Hash operation on the data characteristics to obtain a Hash key value corresponding to the data characteristics; and
a matching unit 442, configured to match the Hash key value with a Hash key value in a characteristic database.

The storage module 450 includes:
a first storage unit 451, configured to optimize a storage location of the data according to the data attributes;
   or
a second storage unit 452, configured to: according to the data attributes, store the data with large 10 access data amount into a rapid storage medium, and store the data with small 10 access data amount into a slow storage medium;
   or
a third storage unit 453, configured to: according to the data attributes, store the data with frequent 10 access into a cache, and store the data with seldom IO access into a storage medium.

Through the description of the foregoing implementation manners, persons skilled in the art may clearly understand that the present invention may be implemented by software plus a necessary hardware platform, and definitely may also be implemented all by hardware, but in most cases, the former one is an exemplary implementation manner. Based on such understanding, all or a part of the technical solutions of the present invention which contribute to the background technology may be embodied in a form of a software product. The computer software product may be stored in a storage medium such as a ROM/RAM, a magnetic disk, or a compact disk, and includes several instructions which are used to make a computer device (which may be a personal computer, a server, or a network device, and so on) execute the method described in each embodiment or some parts of the embodiments of the present invention.

The present invention is introduced in detail in the foregoing. Specific examples are applied for illustration of the principles and implementation manners of the present invention. The description of the foregoing embodiments is only used to help understand the method and its core ideas of the present invention. Meanwhile, those skilled in the art can make various alterations in terms of specific implementation manners and application scopes according to the ideas of the present invention. In conclusion, the content of the specification should not be understood as limitation to the present invention.

## Claims

1. A storage method based on data content identification, comprising:
receiving data from a host;
scanning content of the data to obtain format characteristics of the data;
matching the format characteristics with format characteristics in a content characteristic base to determine attributes of the data; and
sorting and storing the data according to the attributes of the data.

2. The storage method based on data content identification according to claim 1, wherein before the method, further comprising:
performing a Hash operation on the format characteristics of the data whose data attributes are determined, so as to obtain a corresponding Hash key value; and
storing the Hash key value and the data attributes into a content characteristic base correspondingly.

3. The storage method based on data content identification according to claim 1 or 2, wherein the scanning the content of the data to obtain the format characteristics of the data comprises:
scanning contents of the data, obtain the corresponding format characteristics of different contents, wherein the corresponding format characteristics comprise the value of a fixed field.

4. The storage method based on data content identification according to claim 1 or 2, wherein the matching the format characteristics with the format characteristics in the content characteristic base comprises:
performing a Hash operation on the format characteristics of the data to obtain a Hash key value corresponding to the data characteristics; and
matching the Hash key value with the Hash key value in the characteristic base.

5. The storage method based on data content identification according to claim 1 or 2, wherein the data attributes comprise: data type, or data 10 access amount, or data access frequency.

6. The storage method based on data content identification according to claim 1 or 2, wherein the sorting and storing the data according to the attributes of the data in the method comprises:
storing the data of same attributes in a centralized way according to the data type;
or
according to 10 access amount of the data, storing the data with large 10 access data amount into a rapid storage medium, and storing the data with small 10 access data amount into a slow storage medium;
or
according to access frequency of the data, storing the data with frequent 10 access into a cache, and storing the data with seldom 10 access into a storage medium.

7. A storage apparatus based on data content identification, comprising:
a receiving module, configured to receive data from a host;
a scanning module, configured to scan content of the data to obtain format characteristics of the data;
a characteristic base, configured to store format characteristics of various contents;
a characteristics matching module, configured to match the format characteristics obtained by the content scanning module with format characteristics in the content characteristic base to determine attributes of the data; and
a storage module, configured to sort and store the data according to the data attributes determined by the characteristics matching module.

8. The apparatus based on data content identification according to claim 7, further comprising:
a characteristic base generating module, configured to perform a Hash operation on the format characteristics of the data whose data attributes are determined, so as to obtain a corresponding Hash key value; and store the Hash key value and the data attributes into the content characteristic base correspondingly.

9. The apparatus based on data content identification according to claim 7 or 8, wherein:
the content scanning module is specifically configured to obtain the corresponding format characteristics of different contents, wherein the corresponding format characteristics comprise a value of a fixed field.

10. The apparatus based on data content identification according to claim 7 or 8, wherein the characteristics matching module comprises:
a Hash operation unit, configured to perform a Hash operation on the data format characteristics to obtain a Hash key value corresponding to the data format characteristics; and
a matching unit, configured to match the Hash key value with a Hash key value in the content characteristic base.

11. The apparatus based on data content identification according to claim 7 or 8, wherein the data attributes comprise: data type, or data 10 access amount, or data access frequency;
the storage module comprises:
a first storage unit, configured to store data of same attributes in a centralized way according to the data type;
or
a second storage unit, configured to store the data accessed in a large 10 access data amount into a rapid storage medium, and store the data accessed in a small 10 access data amount into a slow storage medium, depending on 10 access amount of the data;
or
a third storage unit, configured to store the data accessed frequently through 10 access into a Cache, and store the data seldom accessed through 10 access into storage media, depending on access frequency of the data.
